# FASCICULE DE BREVET EUROPEEN

(11) **EP 0 570 281 B1**
(45) Date de publication et mention de la délivrance du brevet: **20.08.1997**
(21) Numéro de dépôt: 93401213.9
(22) Date de dépôt: 12.05.1993
(51) Int. Cl.: G05B 19/04, H02J 13/00

(54) **Procédé et dispositif d'enregistrement et de reproduction d'états complexes dans un ensemble d'équipements, par exemple dans un local, et installation s'y rapportant**
Verfahren und Gerät zum Aufnehmen und Wiedergeben von komplexen Zuständen in einer Geräteeinheit, zum Beispiel in einer Raum und Vorrichtung dafür
Method and apparatus for recording and reproducing of complex conditions in an equipment assembly, for example in a room and corresponding installation

(30) Priorité: 13.05.1992 FR 9205774
(43) Date de publication de la demande: 18.11.1993
(73) Titulaire: EURO CP s.a.r.l., F-94240 l'Hay les Roses (FR)
(72) Inventeur: Gilbert, Jérôme, F-92300 Levallois Perret (FR)
(74) Mandataire: Pontet, Bernard

(56) Documents cités:
- EP-A- 0 391 316
- EP-A- 0 433 527
- DE-A- 4 004 097
- FR-A- 2 660 781

## Description

La présente invention concerne un procédé d'enregistrement et de reproduction d'états complexes dans un réseau d'équipements d'un local.

La présente invention concerne également un dispositif d'enregistrement et de reproduction de tels états complexes.

La présente invention concerne encore une installation incluant un tel dispositif.

La présente invention concerne les installations, par exemple domestiques, de bureau ou de locaux professionels, dans lesquels des appareils d'action, tels que des appareils électro-ménagers, des appareils de chauffage, d'éclairage, audio-vidéo, volet roulant, alarme, appareils professionnels etc sont réunis en un réseau grâce à un espace à travers lequel ils peuvent communiquer de manière bi-directionnelle pour émettre des messages d'état et recevoir des messages de commande.

En pratique, l'espace peut-être constitué par le réseau d'alimentation électrique, auquel cas les messages sont transmis par la méthode dite des courants porteurs. Mais l'espace peut également être constituté par un réseau filaire autre que le réseau de distribution d'énergie, ou un espace à travers lequel peuvent circuler des ondes radio, des ondes infrarouges etc. D'autres concrétisations de l'espace de communication sont également envisageables.

C'est notamment pour permettre à l'utilisateur d'effectuer des commandes à distance et/ou automatiques que les appareils d'action sont ainsi équipés pour communiquer avec leur environnement.

Toutefois, la plupart des appareils d'action comportent non seulement une commande marche/arrêt, mais également diverses commandes de réglage permettant d'optimiser leur fonctionnement ou d'adapter ce dernier aux désirs de l'utilisateur.

De plus, la multiplicité des appareils d'action amené à souhaiter certaines commandes groupées.

Par exemple, lorsqu'on entre dans sa maison, on peut souhaiter effectuer simultanément plusieurs opérations : éclairage, mise en fonctionnement du chauffage, désarmement de l'alarme de protection, ouverture des volets roulants si ceux-ci sont fermés, mise en fonctionnement des appareils audio-vidéo etc.

Le EP-A-0 433 527 décrit un procédé permettant de commander ensemble plusieurs appareils d'action à la double condition que la commande qui leur est destinée soit la même et qu'ils aient tous un même élément d'adresse. Ce procédé connu n'est donc pas suffisamment souple pour permettre par une seule commande de l'utilisateur la réalisation d'actions pouvant être hétéroclites, par des appareils d'action pouvant eux-mêmes être hétéroclites et munis d'adresses pouvant elles aussi être hétéroclites.

Le FR-A-2 660 781 décrit un procédé permettant de réguler une installation pièce par pièce dans un bâtiment. Cette solution existante est typique en ce qu'elle fait appel à ce qu'il est convenu d'appeler "une programmation", c'est à dire une succession d'opérations plus ou moins complexes visant à décrire indirectement sur un clavier ou autre terminal de "programmation" l'état souhaité des différents appareils concernés.

La notion de "programmation" a l'inconvénient majeur d'exiger un dispositif de programmation offrant une ergonomie satisfaisante, ce qui est nécessairement coûteux. D'autre part, la programmation a une très forte connotation technique qui décourage de nombreux utilisateurs potentiels.

En outre, les systèmes à programmation manquent de souplesse lorsqu'il s'agit de modifier le résultat souhaité : l'utilisateur, même s'il était motivé pour effectuer une programmation minutieuse lors de la mise en service de l'installation, est souvent beaucoup moins motivé pour effectuer des modifications et il préférera alors se contenter de réglages devenus peu satisfaisants, surtout si entre-temps il a égaré la notice d'utilisation de son matériel.

Le but de la présente invention est de proposer un procédé, un dispositif et une installation qui soient très aisément programmables ou reprogrammables tout en offrant une très grande liberté de choix dans les états de fonctionnement et combinaisons d'états de fonctionnement prévus à l'avance pour les appareils d'action concernés.

Suivant un premier aspect de l'invention, le procédé d'enregistrement et de reproduction d'états complexes dans un ensemble d'équipements reliés entre-eux par un espace de communication bidirectionnelle, ces équipements comprenant des appareils d'action équipés pour émettre des messages d'état et pour recevoir des messages de commande, est caractérisé en ce que :
- dans une étape d'enregistrement, on rend une mémoire réceptive à des informations sur l'état d'appareils d'action faisant partie desdits équipements, et on règle certains au moins des appareils d'action de façon qu'ils émettent à travers l'espace de communication des messages d'état caractéristiques de leur réglage et que ces messages d'état soient enregistrés dans la mémoire ; et
- après la fin de l'étape d'enregistrement, on émet à titre de messages de commande à travers l'espace de communication, à l'initiative d'une commande manuelle ou automatique, des messages de reproduction d'état élaborés d'après le contenu de la mémoire, pour donner à tous les dits "certains" appareils d'action leur réglage correspondant aux messages d'état enregistrés.

Ainsi, la programmation des états qui seront souhaités lorsqu'une commande manuelle ou automatique sera activée est effectuée par action directe sur les appareils d'action devant réagir à la commande manuelle ou automatique.

En pratique, selon un exemple de mise en oeuvre du procédé, l'utilisateur appuie sur un bouton d'ouverture de session d'enregistrement, le cas échéant il sélectionne la commande manuelle ou automatique à laquelle les états que l'on va enregistrer doivent correspondre, puis il visite successivement les appareils d'action en question en effectuant sur chacun d'eux le réglage qu'il souhaite enregistrer. Lorsque ce réglage est effectué, chaque appareil d'action émet un message d'état. Ce message d'état est enregistré par la mémoire puisque celle-ci a été rendue réceptive aux messages d'état. La fin de la session peut être déterminée par action manuelle sur une commande spécifique ou par une temporisation. La mémoire cesse alors d'être réceptive aux messages d'état.

Ensuite, les appareils d'action peuvent être utilisés normalement en agissant sur leurs commandes locales ou sur d'autres dispositifs de commande à distance. Mais lorsque la commande manuelle ou automatique est activée, le procédé selon l'invention place automatiquement, par émission de messages de reproduction d'état, tous les appareils d'action dans leur état correspondant aux messages d'état enregistrés.

Si l'on désire modifier la "programmation" il suffit d'ouvrir une nouvelle session d'enregistrement pour rendre à nouveau la mémoire réceptive aux messages d'état, puis on règle à nouveau chaque appareil d'action, ou du moins ceux nécessitant modification, et on referme à nouveau la session d'enregistrement.

Le procédé est donc particulièrement simple et accessible à une très large majorité d'utilisateurs. Il est tellement simple qu'une brève notice explicative de très petite dimension peut-être prévue directement sur un boitier d'appareil de commande ou dans un petit logement prévu sur ce boitier.

Selon un deuxième aspect de l'invention, le dispositif d'enregistrement et de reproduction d'états complexes dans un ensemble d'équipements reliés par un espace de communication bidirectionnelle, ces équipements comprenant des appareils d'action équipés pour émettre à travers l'espace de communication des messages d'état et recevoir des messages de commande, est caractérisé en ce qu'il comprend :
- une mémoire d'enregistrement d'états,
- un micro-contrôleur programmé pour recevoir des messages d'état, gérer leur enregistrement dans la mémoire, et élaborer comme messages de commande à partir de ces messages d'état, des messages de reproduction d'état,
- un moyen de transmission bi-directionnel entre le micro-contrôleur et l'espace de communication,
- un moyen d'ouverture de session d'enregistrement, et
- un moyen initiateur pour initier l'émission groupée, à travers l'espace de communication, des messages de reproduction d'état élaborés à partir des états enregistrés, pour placer sensiblement simultanément les appareils d'action dans leur état enregistré en mémoire.

Suivant un troisième aspect, l'invention vise une installation pour équiper un local, dans laquelle les appareils d'action sont reliés, par un espace de communication à travers lequel ils peuvent émettre des messages d'état et dont ils peuvent recevoir des messages de commande, avec un appareil d'enregistrement et de reproduction d'états complexes selon le deuxième aspect.

D'autres particularités et avantages de l'invention ressortiront encore de la description ci-après, relative à des exemples non limitatifs.

Aux dessins annexés :
- la figure 1 est une vue schématique d'une installation selon l'invention ;
- la figure 2 est un diagramme des opérations successives mises en oeuvre dans le procédé selon l'invention ;
- la figure 3 est un schéma bloc d'un appareil d'action ;
- la figure 4 est un schéma bloc d'un appareil enregistreur-reproducteur d'états complexes ;
- la figure 5 est un organigramme simplifié d'une partie du programme d'application d'un appareil d'action ;
- la figure 6 est un organigramme simplifié du programme de gestion de procédé d'un appareil enregistreur-reproducteur d'états complexes ;
- la figure 7 est un schéma simplifié d'un message d'état ; et
- la figure 8 est un schéma simplifié d'un message de reproduction détat.

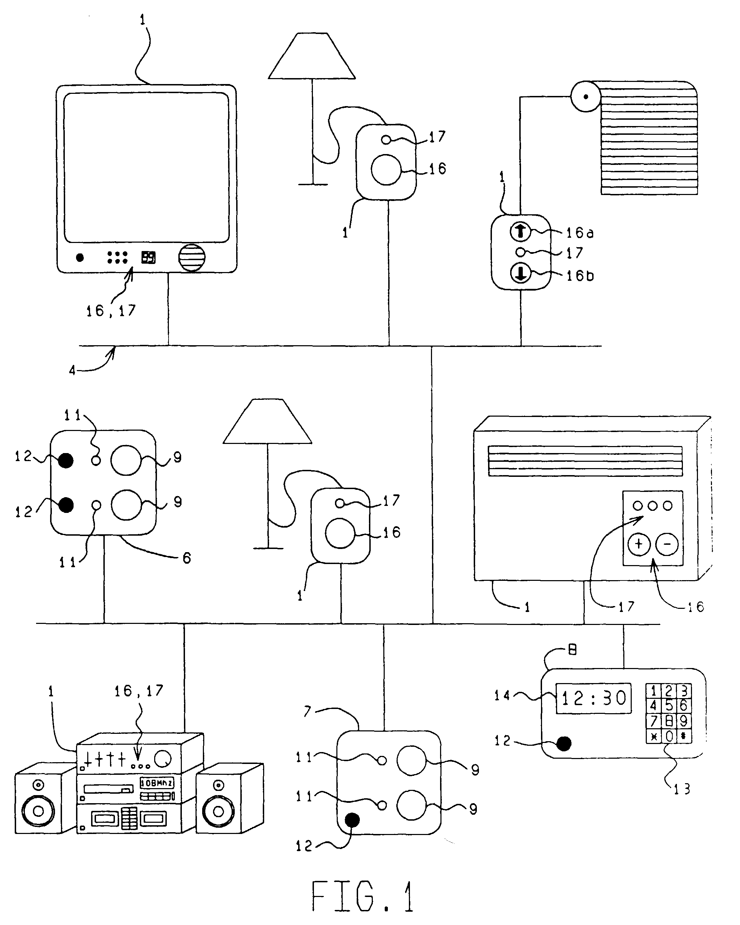

Dans l'exemple représenté à la figure 1, l'installation, volontairement simplifiée, comprend divers appareils d'action 1, à savoir un téléviseur, deux lampadaires, un convecteur de chauffage, une chaine audio-vidéo et un volet roulant, qui sont reliés les uns aux autres par un espace de communication bidirectionnel 4 à travers lequel ils peuvent échanger des messages d'état provenant des appareils d'action 1 et des messages de commande destinés aux appareils d'action 1. Les appareils d'action 1 comprennent tous au moins un bouton de réglage 16 offrant au minimum deux états de fonctionnement, par exemple "marche" et "arrêt", et le cas échéant un ou plusieurs voyants lumineux ou autres indicateurs 17. Le volet roulant a un bouton 16a pour la montée et un bouton 16b pour la descente.

L'espace 4 peut-être constitué par le réseau d'alimentation électrique, auquel cas les messages sont élaborés de manière concrète selon la technique des courants porteurs. L'espace 4 peut également être constitué par un autre réseau filaire, ou par un espace perméable aux ondes radio ou aux signaux infra-rouges.

Trois appareils d'enregistrement et de reproduction d'états 6, 7, 8 sont également reliés au réseau 4 pour recevoir les messages d'état de la part des appareils d'action 1, et leur adresser au besoin, en tant que messages de commande, des messages de reproduction d'état.

L'appareil d'enregistrement et de reproduction 6 est du type manuel, il comprend deux boutons de télécommande 9 à chacun desquels est associé un voyant de signalisation 11 et une commande manuelle d'ouverture de session d'enregistrement 12.

L'appareil d'enregistrement et de reproduction 7 est identique à l'appareil 6 sauf qu'il ne comporte qu'un seul bouton 12 d'ouverture de session sélectivement associé à l'un ou l'autre des deux boutons de télécommande 9, d'une manière qui sera décrite plus loin.

L'appareil d'enregistrement et de reproduction 8 est un programmateur horaire comprenant un clavier de programmation 13, un bouton d'ouverture de session d'enregistrement 12, et une horloge 14.

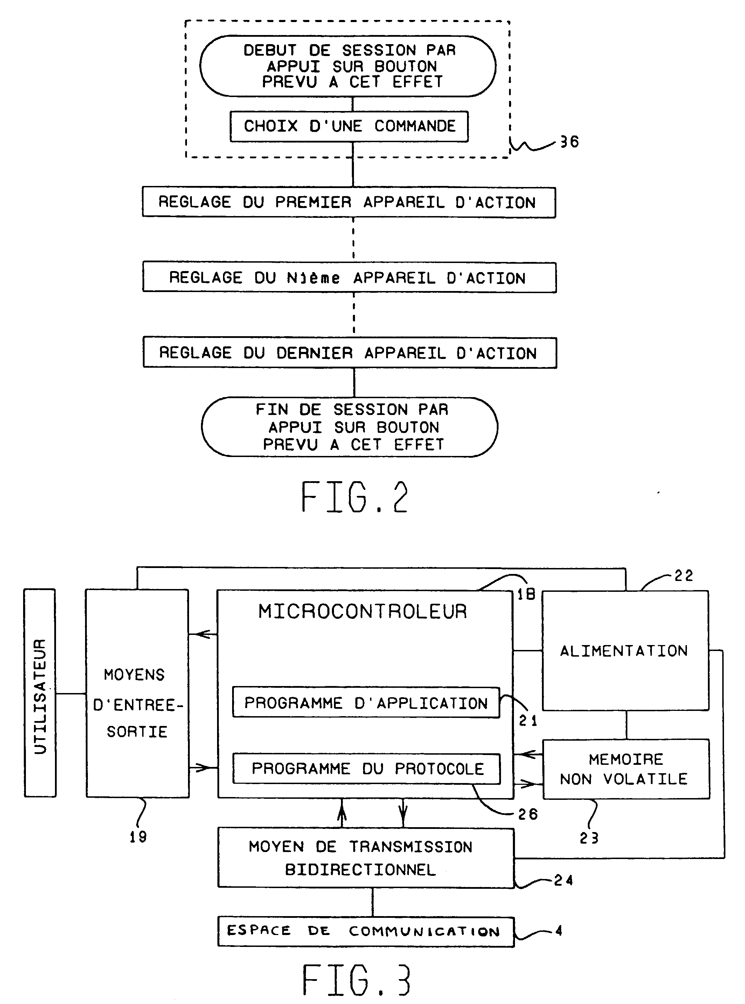

Comme représenté à la figure 3, chaque appareil d'action comporte un micro-contrôleur 18 relié à des moyens d'entrée/sortie 19 qui font l'interface avec l'utilisateur. En pratique, ces moyens d'entrée/sortie sont constitués par les boutons 16 et voyants lumineux 17 de l'appareil, et aussi par les actionneurs de l'appareil d'action, qui fournissent à l'utilisateur l'action attendue, par exemple éclairage, chauffage etc.

En fonction des commandes effectuées sur les boutons 16, et le cas échéant des signaux reçus de capteurs, un programme d'application 21 prévu dans le micro-contrôleur gère l'action des voyants lumineux 17 et des actionneurs (lampes, moteurs, résistances chauffantes, relais etc) faisant partie des moyens d'entrée/sortie. Le micro-contrôleur 18 est en outre relié à une alimentation 22 et à une mémoire non-volatile 23. Le micro-contrôleur 18 est aussi relié à l'espace 4 par l'intermédiaire d'un moyen de transmission bi-directionnel 24, par exemple un moyen capable de transformer en message du type courants porteurs les informations reçues du micro-contrôleur 18, et inversement de transformer en signaux acceptables par le micro-contrôleur 18 les messages du type courants porteurs provenant de l'espace 4.

Le micro-contrôleur 18 renferme encore un programme de protocole 26 qui gère les échanges d'informations entre le moyen de transmission bi-directionnel, les moyens d'entrée/sortie et la mémoire non-volatile.

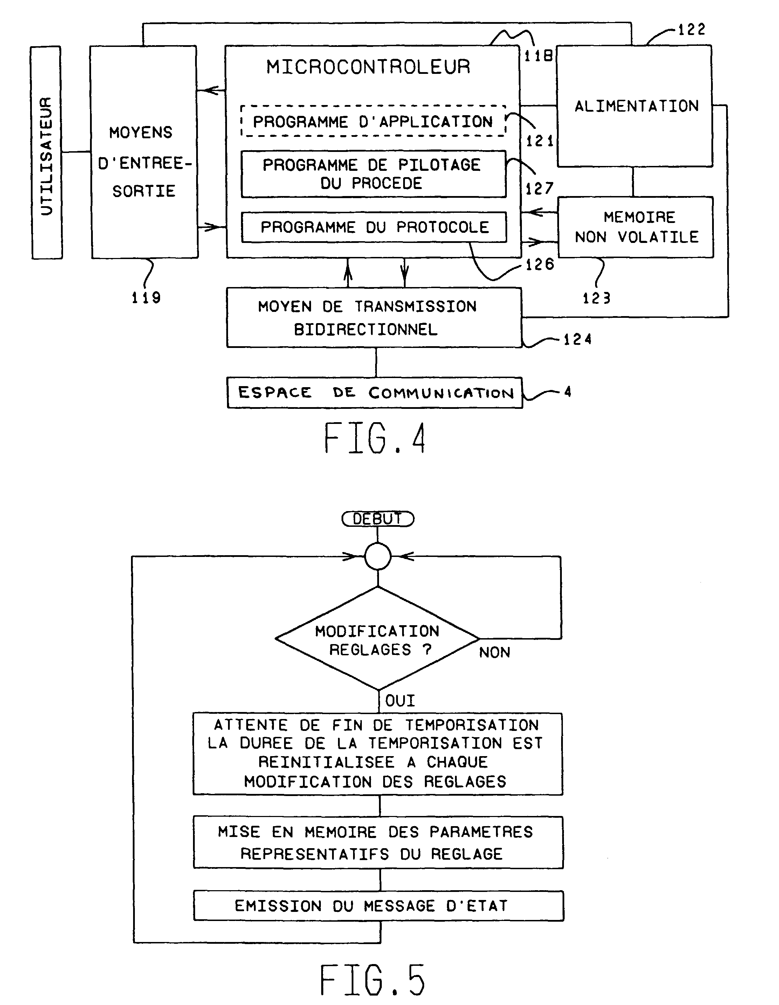

La figure 5 représente une partie du programme d'application 21 de la figure 3.

Dans une étape initiale représentée par "début", le programme d'application met en mémoire l'état des réglages des boutons 16 de l'appareil d'action.

Ensuite on compare cycliquement l'état des réglages des boutons 16 avec l'état des réglages mis en mémoire, jusqu'à ce qu'une modification des réglages soit relevée. Dans ce cas, on attend l'écoulement d'une temporisation qui est réinitialisée à chaque modification de l'état des réglages. Lorsque ceux-ci sont stabilisés, la temporisation arrive à son terme et il y a ensuite mise en mémoire de l'état des réglages, et émission d'un message d'état à travers l'espace 4 via le moyen de transmission bi-directionnel 24. On voit qu'ainsi seuls les états stabilisés après une modification font l'objet d'un message d'état. La mise en mémoire de l'état des réglages dans la mémoire non-volatile de l'appareil d'action est facultative. Avec certains modes de détection des modifications des réglages, cette mise en mémoire n'est pas nécessaire.

Ainsi, d'après le processus décrit en référence à la figure 5, on comprend que les appareils d'action 1 n'émettent un message d'état à travers l'esapce 4 que lorsque leur réglage a été modifié.

Comme le montre la figure 4, le schéma-bloc des appareils d'enregistrement et de reproduction ne diffère de celui des appareils d'action 1 qu'en ce que le micro-contrôleur 118 comprend un programme de gestion de procédé 127 tandis que le programme d'application 121 n'est plus qu'optionnel. Par ailleurs, le schéma est identique à celui de la figure 3, les références numériques des éléments correspondants étant augmentées de 100.

Le programme de gestion de procédé 127 est celui qui va gérer l'enregistrement des messages d'état et l'envoi des messages de reproduction d'état à travers l'espace 4 via le moyen de transmission bi-directionnel 124.

Le programme d'application 121 n'est prévu que dans certains types d'appareils d'enregistrement et de reproduction, par exemple le programmateur horaire 8 pour son fonctionnement automatique propre.

Les moyens d'entrée/sortie 119 des appareils d'enregistrement et de reproduction comprennent les boutons de télécommande 9, le ou les boutons d'ouverture de session d'enregistrement 12 et les voyants lumineux 11.

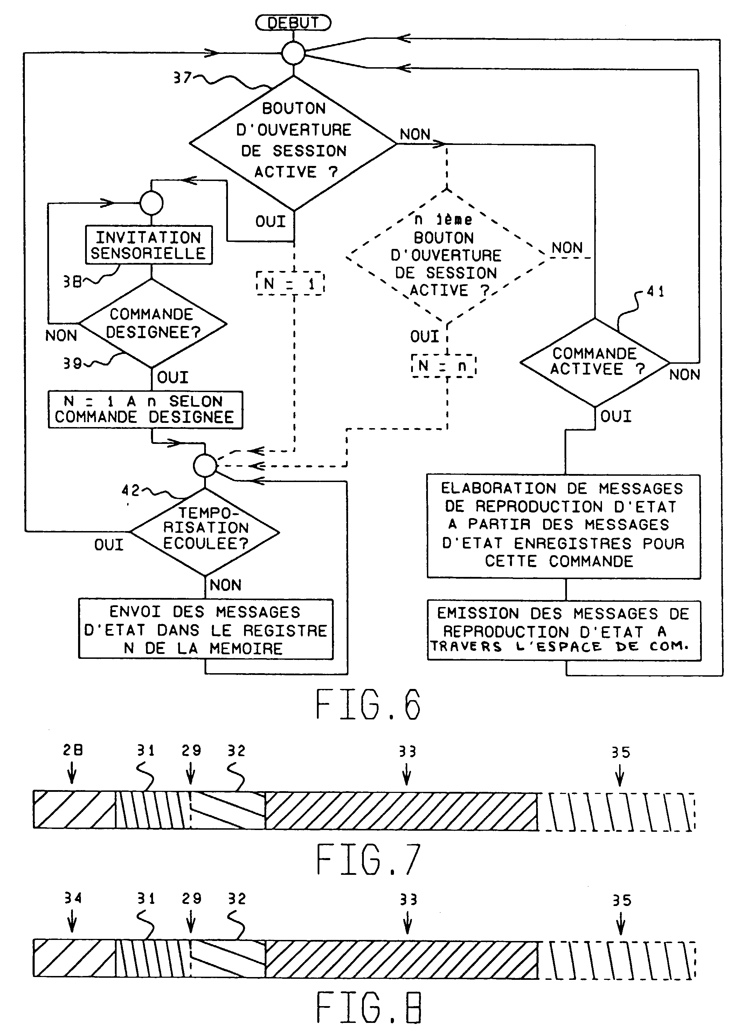

On a représenté à la figure 6 le programme de gestion de procédé 127. Lorsque le bouton d'ouverture de session 12 de l'appareil 7 est activé, on passe à l'étape 38 "invitation sensorielle", qui consiste par exemple à faire clignoter les deux voyants 11 de l'appareil 7 pour inviter l'utilisateur à désigner l'un ou l'autre des boutons de télécommande 9, comme représenté aussi en haut de la figure 2.

Cette désignation va signifier que les états que l'on va enregistrer seront reproduits ultérieurement lorsqu'on actionnera le bouton 9 désigné. Lorsque le bouton de télécommande est désigné, après vérification qu'une temporisation n'est pas écoulée, on envoie dans la mémoire non volatile 123 de l'appareil d'enregistrement et reproduction 7 les messages d'état reçus des appareils d'action 1. Selon que c'est l'un ou l'autre des boutons de télécommande 9 qui a été désigné, les messages d'état sont enregistrés dans un premier ou un second registre de la mémoire.

En pratique, pendant l'écoulement de la temporisation, l'utilisateur va régler les appareils d'action 1, c'est à dire les boutons de commande 16 de ces appareils pour que ceux-ci soient dans l'état de réglage qu'il souhaite pouvoir reproduire ultérieurement en actionnant le bouton de télécommande 9 désigné. Ces étapes successives de réglage des appareils d'action sont représentées à la figure 2. De préférence, lorsqu'un état va être enregistré en mémoire de l'appareil de commande, celui-ci vérifie si l'adresse de ce message est différente de celle du message enregistré immédiatement avant. Dans la négative, c'est que l'opérateur a voulu corriger un réglage en cours. Autrement dit, le message enregistré immédiatement avant n'était que provisoire, et le procédé enregistre le nouveau message à la place du précédent, qui est alors effacé. Lorsque la temporisation est écoulée, on est ramené au début du programme de gestion de procédé de la figure 6. Avant cela, le procédé peut comporter une étape consistant à vérifier que dans l'ensemble des messages enregistrés aucune adresse d'appareil d'action n'apparaît deux fois. Si une adresse apparaît deux fois, autrement dit si un appareil d'action a fait l'objet de deux réglages pendant la session d'enregistrement, le procédé efface le plus ancien des deux.

Au lieu d'une temporisation pour clore la session d'enregistrement, il peut être prévu une commande manuelle spécifique que l'utilisateur actionne pour remettre l'installation dans son état normal, comme indiqué à la figure 2. Même si une commande manuelle est prévue, la temporisation peut tout de même être prévue comme moyen surabondant, pour le cas où l'utilisateur omettrait d'actionner le bouton de fin de session.

Lorsqu'on est renvoyé au début du procédé, il est probable que le bouton d'ouverture de session n'est plus activé, à moins que l'utilisateur ne l'actionne une seconde fois pour faire un enregistrement correspondant à l'autre bouton de télécommande 9. Si l'on suppose tous les enregistrements terminés, on passe dans la partie du logiciel qui est située à droite de la figure 6, dans laquelle, si l'un des boutons de télécommande 9 est activé, le programme de gestion de procédé 127 élabore des messages de reproduction d'état à partir des messages d'état enregistrés comme correspondant à celui des boutons de télécommande 9 qui est activé.

En outre, ces messages de reproduction d'état sont émis à travers l'espace 4 via le moyen de transmission bi-directionnel 124 de l'appareil d'enregistrement et de reproduction 7.

Comme le montre la figure 7, un message d'état comprend un préfixe 28 signifiant "message d'état", une adresse 29, et une partie 33 indicative de l'état de l'appareil d'action. En outre, dans l'exemple représenté, le message d'état comprend une signature 35 pour lever toute ambiguïté sur le type d'appareil concerné. Cette signature comporte par exemple un code propre au fabricant de l'appareil et un code propre à l'appareil chez ce fabricant, et un code représentatif du numéro de série de l'appareil. L'adresse 29 est subdivisée en une adresse de sous-réseau 31 et une adresse d'appareil 32. L'adresse de sous-réseau 31 est la même pour toute l'installation. Elle sert à éviter que les signaux émis par l'installation ne constituent des parasites pour d'éventuelles installations voisines, similaires. L'adresse d'appareil 32 désigne l'appareil d'action dont provient le message d'état.

Comme le montre la figure 8, le message de reproduction d'état destiné au même appareil d'action ne se distingue du message d'état que par le remplacement du préfixe 28 par un préfixe 34 qui signifie "message de reproduction d'état". Le préfixe 34 est universel c'est à dire qu'il est le même pour tous les messages de reproduction d'état.

Par conséquent, le programme de gestion de procédé, pour élaborer un message de reproduction d'état, remplace le préfixe 28 par le préfixe universel 34 et reprend telles quelles les adresses 31, 32 et la partie significative d'état 33, ainsi que la signature 35 caractéristique de l'appareil si elle a été fournie dans le message d'état. Ces informations ont été stockées dans la mémoire non volatile de l'appareil enregistreur-reproducteur d'états pendant la phase d'enregistrement.

Ainsi, l'appareil d'enregistrement et de reproduction n'a même pas besoin de connaître le langage des appareils d'action, et les appareils d'action peuvent sans inconvénient avoir des langages différents.

Néanmoins, le système d'adresse devra être cohérent, l'appareil d'enregistrement et de reproduction refuse les messages dont l'adresse de sous-réseau est différente de celle de l'installation, et il est impératif que les adresses d'appareil 32 soient toutes différentes les unes des autres pour que chaque appareil puisse distinguer les commandes qui lui sont destinées.

Pour assurer ces différentes conditions préalables, on peut réaliser une recherche automatique d'adresses de la manière décrite dans le FR-A-2670590 non publié à la date de priorité dont bénéficie la présente demande. On ne peut pas exclure totalement le cas où l'utilisateur ferait une mise en correspondance après avoir enregistré des états dans l'appareil enregistreur-reproducteur. La signature des messages de reproduction d'état va alors éviter que des actions aberrantes soient initiées dans les appareils d'action dont les adresses ont été modifiées, par exemple interverties.

L'appareil d'enregistrement et de reproduction 6 diffère de l'appareil 7 en ce qu'il est prévu un bouton d'ouverture de session d'enregistrement 12 pour chaque bouton de télécommande 9. Ainsi, en sélectionnant manuellement l'un ou l'autre des boutons 12, on choisit le bouton de télécommande 9 pour lequel l'enregistrement de messages d'état va être effectué.

Dans ces conditions, comme illustré par le pointillé 36 à la figure 2, les étapes d'appui sur le bouton d'ouverture de session d'enregistrement 12 et de choix d'un bouton de télécommande 9 sont confondues en une seule et même étape.

Les modifications que cela entraîne dans le logiciel de la figure 6 sont représentées en pointillés. A la sortie "oui" du test 37 "bouton d'ouverture de session activé ?", les étapes 38 "invitation sensorielle", et 39 "commande désignée ?" disparaissent. De la sortie "non" du test 37 "bouton d'ouverture de session activé ?", on passe à une étape schématisée par un test "n^{ième} bouton d'ouverture de session activé ?". S'il n'y a qu'un seul autre bouton d'ouverture de session, ce test répond simplement à la question de savoir si ledit autre bouton est activé. Si "non", on passe au test 41 "commande activée ?". Si au contraire le second bouton d'ouverture de session est activé, on est renvoyé vers le test 42 "temporisation écoulée ?". Si il y a plusieurs autres boutons d'ouverture de session, le test "n^{ième} bouton d'ouverture de session activé ?" correspond à une cascade de tests portant successivement sur chacun des "autres" boutons d'ouverture de session. La sortie "non" de chaque test conduit au test suivant. Si le résultat du test portant sur le dernier bouton d'ouverture de session est "non", on passe au test 41. Si la réponse à un test portant sur l'un quelconque des "autres" boutons est "oui", on est renvoyé vers le test 42 et la suite des tests portant sur les "autres" boutons n'est pas effectuée.

Les appareils d'enregistrement et de reproduction 6 et 7 comportant plusieurs boutons de télécommande 9 sont utiles pour permettre à l'utilisateur de choisir entre des états complexes différents, par exemple un état "jour" et un état "nuit", ou encore un état "maison occupée" et un état "maison vide".

Le programmateur horaire 8 équivaut à un appareil d'enregistrement et de reproduction qui aurait un seul bouton de télécommande 9 actionné automatiquement lorsqu'un horaire prédéterminé par programmation du clavier 13 est atteint.

L'appareil d'enregistrement et de reproduction 8 ayant une seule télécommande automatique, ou un appareil du même genre qui aurait une seule télécommande manuelle telle que 9, permettrait à l'utilisateur d'établir à volonté, par exemple lorsqu'il se réveille (programmateur horaire) ou lorsqu'il s'installe dans son salon (appareil de commande à un seul bouton 9), une ambiance prédéterminée, sans qu'il soit possible de savoir quel état complexe sera souhaité ultérieurement, par exemple lorsqu'il quittera son salon.

Bien entendu, l'invention n'est pas limitée aux exemples décrits et représentés.

On pourrait par exemple prévoir que chaque dispositif d'enregistrement et de reproduction comporte un petit écran de visualisation indiquant à chaque étape du procédé les opérations que l'utilisateur doit effectuer. Cet écran remplacerait notamment les voyants lumineux 11.

On pourrait également déclencher l'enregistrement et/ou la reproduction d'états complexes au moyen d'une télécommande infra-rouge ou radio.

On peut encore prévoir que les appareils d'action n'émettent des messages d'état que lorsqu'une session d'enregistrement a été ouverte. Certains appareils disposent de nombreuses possibilités de réglage comme par exemple les appareils audio-vidéo. Dans ce cas, le codage du profil de réglage avec toute la précision affectée à chaque paramètre peut excéder la capacité du champ d'information 33 "partie indicative de l'état de l'appareil d'action". Dans la pratique, on ne place dans le champ d'information 33 qu'un profil de réglage approximatif, dans lequel chaque paramètre a une valeur choisie parmi un petit nombre de valeurs possibles. Un tel profil de réglage approximatif est compatible avec la capacité du champ 33, et lors de la reproduction d'état, l'utilisateur ne remarquera pas la différence avec le réglage précis qu'il avait eu l'intention d'enregistrer et de pouvoir reproduire.

## Revendications

1. Procédé d'enregistrement et de reproduction d'états complexes dans un ensemble (4) d'équipements reliés par un espace de communication bidirectionnelle (4), ces équipements comprenant des appareils d'action (1) équipés pour émettre des messages d'état et pour recevoir des messages de commande, *r* caractérisé en ce que :
- dans une étape d'enregistrement, on rend une mémoire (123) réceptive aux messages d'état des appareils d'action, et on règle certains au moins des appareils d'action (1) de façon qu'ils émettent à travers l'espace (4) des messages d'état caractéristiques de leur réglage et que ces messages d'état soient enregistrés dans la mémoire (123),
- après la fin de l'étape d'enregistrement, on émet à travers l'espace (4), à l'initiative d'une commande manuelle (9) ou automatique (13), à titre de messages de commande, des messages de reproduction d'état élaborés d'après le contenu de la mémoire (123), pour donner aux dits "certains" appareils d'action (1) leur réglage correspondant aux messages d'état enregistrés.

2. Procédé selon la revendication 1, caractérisé en ce que pour distinguer les appareils d'action (1) dont les états doivent être enregistrés relativement à d'autres appareils d'action que l'on souhaite insensibles à la commande manuelle ou automatique, on n'entre dans la mémoire (123) que des messages d'état modifié.

3. Procédé selon la revendication 1 ou 2, caractérisé en ce qu'on utilise comme appareils d'action (1), des appareils équipés pour n'émettre un message d'état à travers l'espace (4) que lorsque leur état est modifié.

4. Procédé selon l'une des revendications 1 à 3, caractérisé en ce qu'on détecte si dans une même session d'enregistrement un même appareil d'action a émis deux messages d'état espacés dans le temps et on ne conserve en méméoire que le plus récent des deux.

5. Procédé selon l'une des revendications 1 à 4, caractérisé en ce que pour élaborer un message de reproduction d'état, on combine une partie variable (29, 33, 35) imitant une partie variable du message d'état correspondant et une partie (34) commune à tous les messages de reproduction d'état et absente dans les messages d'état, la partie variable incluant une adresse (32) de l'appareil d'action dont provient le message d'état et un signal (33) représentatif de l'état de l'appareil d'action.

6. Procédé selon l'une des revendications 1 à 5, caractérisé en ce qu'on procède à deux étapes d'enregistrement successives, correspondant à deux combinaisons de réglages différentes des appareils d'action, et on place les deux séries de messages d'état correspondantes dans deux registres différents de la mémoire ;
et en ce qu'on émet à travers l'espace (4), à l'initiative de l'une de deux commandes manuelles (9) ou automatiques, une série de messages de reproduction d'état correspondant à l'une respective des deux séries de messages d'état.

7. Procédé selon l'une des revendications 1 à 6, caractérisé en ce que pour rendre la mémoire réceptive, on manoeuvre une commande d'ouverture de session d'enregistrement (12).

8. Procédé selon la revendication 7, caractérisé en ce qu'après avoir manoeuvré la commande d'ouverture de session d'enregistrement (12), on désigne la commande manuelle (9) ou automatique à l'initiative de laquelle les états que l'on va enregistrer devront être reproduits.

9. Procédé selon la revendication 8, caractérisé en ce que pour désigner la commande, on actionne physiquement la commande manuelle (9) à l'initiative de laquelle les états que l'on va enregistrer devront être reproduits.

10. Procédé selon la revendication 8 ou 9, caractérisé en ce que l'on choisit la commande manuelle ou automatique parmi plusieurs commandes manuelles ou automatiques (9) signalées sensoriellement depuis que la commande d'ouverture de session (12) a été manoeuvrée.

11. Procédé selon l'une des revendications 1 à 10, caractérisé en ce que pour rendre la mémoire réceptive, on manoeuvre une commande d'ouverture de session d'enregistrement (12), cette commande d'ouverture étant spécifique de la commande manuelle (9) ou automatique (13) à l'initiative de laquelle les états que l'on va enregistrer devront être reproduits.

12. Dispositif d'enregistrement et de reproduction d'états complexes dans un ensemble d'équipements reliés par un espace de communication bidirectionnelle (4), ces équipements comprenant des appareils d'action (1) équipés pour émettre à travers l'espace de communication des messages d'état (28,31 à 33) et recevoir des messages de commande (31-34), caractérisé en ce qu'il comprend :
- une mémoire d'enregistrement d'états (123) ;
- un micro-contrôleur (118) programmé pour revecoir des messages d'état, gérer leur enregistrement dans la mémoire (123), et élaborer comme messages de commande ; à partir de ces messages d'état (28, 31 à 33), des messages de reproduction d'états (34, 31, 32, 33, 35) ;
- un moyen de transmission bi-directionnel (124) entre le micro-contrôleur l'espace de communication ;
- un moyen d'ouverture de session d'enregistrement (12) ; et
- un moyen initiateur (9) pour initier l'émission groupée, à travers l'espace de communication (4), des messages de reproduction d'état (31-35) élaborés à partir des états enregistrés, pour placer sensiblement simultanément les appareils d'action (1) dans leur état enregistré en mémoire.

13. Dispositif selon la revendication 12, caractérisé en ce que le moyen pour initier l'émission à travers l'espace de communication (4) est un programme d'application (121) du micro-contrôleur (118), assurant une initiation au moins partiellement automatique de l'émission des messages de reproduction d'état.

14. Dispositif selon la revendication 12, caractérisé en ce que le moyen (13) pour initier l'émission à travers l'espace de communication (4) est programmable par l'utilisateur.

15. Dispositif selon la revendication 12, caractérisé en ce que le moyen pour initier l'émission comprend une commande manuelle (9) accessible à un utilisateur.

16. Dispositif selon l'une des revendications 12 à 15, caractérisé en ce que le moyen d'ouverture de session comprend une commande manuelle d'ouverture de session (12) accessible à l'utilisateur.

17. Dispositif selon l'une des revendications 12 à 16, caractérisé en ce qu'il comprend au moins deux moyens initiateurs (9) et en ce que la mémoire peut enregistrer au moins deux séries de messages d'état correspondant chacune à l'un des moyens initiateurs (9).

18. Dispositif selon la revendication 17, caractérisé en ce qu'il comprend des moyens de signalisation (11) affectés à chaque moyen initiateur (9), et en ce que le micro-contrôleur (118) est programmé pour, lorsque le moyen d'ouverture de session a été actionné, activer les moyens de signalisation (11), attendre la désignation d'un moyen initiateur (9) parmi ceux correspondant aux moyens de signalisation (11) activés, et classer les messages d'état reçus dans un registre de la mémoire (123) affecté au moyen initiateur désigné.

19. Dispositif selon la revendication 18, caractérisé en ce que le micro-contrôleur (118) est programmé pour interpréter comme une désignation d'un moyen initiateur (9) l'actionnement de ce moyen initiateur par l'utilisateur après que le moyen d'ouverture de session (12) a été actionné.

20. Dispositif selon la revendication 17, caractérisé en ce qu'il comprend un moyen d'ouverture de session (12) pour chaque moyen initiateur (9).

21. Dispositif selon l'une des revendications 12 à 20, caractérisé en ce que le micro-contrôleur (118) est programmé pour enregistrer les messages d'état (29, 31-33, 35) sans modification substantielle et pour émettre à titre de messages de reprodution d'état des messages (31-35) reproduisant les messages d'état en y apposant un caractère universel (34) des messages de reproduction d'état émis par le dispositif.

22. Installation dans laquelle des appareils d'action (1) sont reliés par un espace de communication bidirectionnelle (4) à travers lequel ils peuvent émettre des messages d'état et dont ils peuvent recevoir des messages de commande, avec un dispositif (6 à 8) d'enregistrement et de reproduction d'états complexes selon l'une des revendications 12 à 20.

23. Installation selon la revendication 22, caractérisée en ce que les appareils d'action (1) sont d'un type n'émettant un message d'état que lorsque leur état est modifié.

24. Installation selon la revendication 22 ou 23, caractérisée en ce que les appareils d'action (1) sont d'un type émettant des messages d'état comportant une partie signature (35) caractérisant le type d'appareil d'action.

25. Installation selon l'une des revendications 22 à 24, caractérisé en ce que les appareils d'action (1) comprennent au moins un appareil d'action émettant, comme messages d'état, des messages d'état approximatifs.

## Claims

1. Method of recording and of reproducing complex statuses in an equipment assembly (4) connected by a bidirectional communications medium (4), these equipments comprising functional devices (1) equipped such that they can send status messages and receive control messages, characterized in that:
- in a recording stage, a memory (123) is made receptive to the status messages of the functional devices and at least "certain" of the functional devices (1) are adjusted such that they send, through the communications medium (4), status messages which are characteristic of their adjustment and such that these status messages are recorded in the memory (123),
- after the end of the recording stage, there is sent, through the medium (4), in response to a manual (9) or automatic (13) command, as control messages, status reproducing messages generated according to the contents of the memory (123) in order to give to the said "certain" functional devices (1) their adjustments corresponding to the recorded status messages.

2. Method according to Claim 1, characterized in that in order to distinguish the functional devices (1) whose statuses must be recorded from other functional devices which are required to be insensitive to the manual or automatic control, only modified status messages are entered into the memory (123).

3. Method according to Claim 1 or 2, characterized in that there are used, as functional devices (1), devices which are equipped to send a status message through the medium (4) only when their status is modified.

4. Method according to one of Claims 1 to 3, characterized in that it is detected if, during one and the same recording session, a same functional device has sent two status messages separated in time, and in that only the most recent of the two messages is retained in memory.

5. Method according to one of Claims 1 to 4, characterized in that in order to generate a status reproducing message, a variable section (29, 33, 35) imitating a variable section of the corresponding status message is combined with a section (34) common to all of the status reproducing messages and absent from the status messages, the variable section including an address (32) of the functional device from which the status message came and a signal (33) representative of the status of the functional device.

6. Method according to one of Claims 1 to 5, characterized in that two successive recording stages are carried out, corresponding to two different combinations of adjustments of the functional devices, and the two series of status messages are placed in two different registers of the memory;
and in that there is sent through the medium (4), in response to one of two manual (9) or automatic commands, a series of status reproducing messages corresponding to the relevant one of the two series of status messages.

7. Method according to one of Claims 1 to 6, characterized in that in order to make the memory receptive, a recording session start control (12) is operated.

8. Method according to Claim 7, characterized in that after having operated the recording session start control (12), the manual (9) or automatic control is designated at the initiative of that one of the statuses to be recorded which will have to be reproduced.

9. Method according to Claim 8, characterized in that in order to designate the control, the manual control (9) is operated physically at the initiative of that one of the statuses to be recorded which will have to be reproduced.

10. Method according to Claim 8 or 9, characterized in that the manual or automatic control is chosen from among several manual or automatic controls (9) indicated in a sensory manner once the session start control (12) has been operated.

11. Method according to one of Claims 1 to 10, characterized in that in order to make the memory receptive, a recording session start control (12) is operated, this start control being specific to the manual (9) or automatic (13) control at the initiative of that one of the statuses to be recorded which will have to be reproduced.

12. Device for recording and reproducing complex statuses in an equipment assembly connected by a bidirectional communications medium (4), these equipments comprising functional devices (1) equipped to send status messages (18, 31 to 33), through the communications medium, and to receive control messages (31-34), characterized in that it comprises:
- a memory for recording statuses (123),
- a micro-controller (118) programmed to receive status messages, to manage their recording in the memory (123), and to generate status reproducing messages (34, 31, 32, 33, 35) as control messages on the basis of these status messages (28, 31 to 33).
- a means of bidirectional transmission (124) between the micro-controller and the communications medium,
- a means (12) of starting a recording session; and
- an initiating means (9) to initiate the grouped sending, through the communications medium (4), of status reproducing messages (31-35) generated on the basis of the recorded statuses, in order to set, in a substantially simultaneous manner, the functional devices (1) into their statuses as recorded in memory.

13. Device according to Claim 12, characterized in that the means of initiating sending through the communications medium (4) is an application program (121) of the micro-controller (118), providing an initiation, which is at least partially automatic, of the sending of status reproducing messages.

14. Device according to Claim 12, characterized in that the means (13) of initiating sending through the communications medium (4) is programmable by the user.

15. Device according to Claim 12, characterized in that the means of initiating sending comprises a manual control (9) accessible to a user.

16. Device according to one of Claims 12 to 15, characterized in that the session start means comprises a manual session start control (12) accessible to the user.

17. Device according to one of Claims 12 to 16, characterized in that it comprises at least two initiating means (9) and in that the memory can record at least two series of status messages, each one corresponding to one of the initiating means (9).

18. Device according to Claim 17, characterized in that it comprises means of indicating (11) assigned to each initiating means (9) and in that the micro-controller (118) is programmed such that, when the session start means has been operated, it activates the indicating means (11), waits for the designation of an initiating means (9) from among those corresponding to the activated indicating means (11), and files the status messages received in a register of the memory (123) allocated to the designated initiating means.

19. Device according to Claim 18, characterized in that the micro-controller (118) is programmed to interpret, as a designation of an initiating means (9), the operation of this initiating means by the user after the session start means (12) has been operated.

20. Device according to Claim 17, characterized in that it comprises a session start means (12) for each initiating means (9).

21. Device according to one of Claims 12 to 20, characterized in that the micro-controller (118) is programmed to record the status messages (29, 31-33, 35) without substantial modification and to send, as status reproducing messages, messages (31-35) reproducing the status messages whilst adding to them a universal character (34) for status reproducing messages sent by the device.

22. Installation wherein functional devices (1) are connected, by a bidirectional communications medium (4) through which they can send status messages and through which they can receive control messages, with a device (6 to 8) for recording and reproducing complex statuses according to one of Claims 12 to 20.

23. Installation according to Claim 22, characterized in that the functional devices (1) are of a type sending a status message only when their status is modified.

24. Installation according to Claim 22 or 23, characterized in that the functional devices (1) are of a type sending status messages comprising a signature section (35) characterizing the type of functional device.

25. Installation according to one of Claims 22 to 24, characterized in that the functional devices (1) comprise at least one functional device sending, as status messages, approximate status messages.

## Patentansprüche

1. Verfahren zum Aufnehmen und Wiedergeben von komplexen Zuständen in einer Gruppe von technischen Einrichtungen, die miteinander durch einen in zwei Richtungen arbeitenden Kommunikationsweg (4) verbunden sind, wobei diese technischen Einrichtungen Funktionsgeräte (1) umfassen, die zum Aussenden von Zustandsmeldungen und Empfangen von Befehlsmeldungen ausgebildet sind, dadurch gekennzeichnet, daß:
- in einer Aufnahmestufe ein Speicher (123) für den Empfang von Zustandsmeldungen von den Funktionsgeräten bereit gemacht wird und zumindest bestimmte der Funktionsgeräte (1) derart eingestellt werden, daß sie über den Kommunikationsweg (4) charakteristische Zustandsmeldungen über ihre Einstellung aussenden und daß diese Zustandsmeldungen in dem Speicher (123) aufgenommen werden,
- nach dem Ende der Aufnahmestufe Zustandswiedergabemeldungen, die dem Inhalt des Speichers (123) entsprechend erarbeitet werden, als Befehlsmeldung über den Kommunikationsweg (4) durch eine Hand-(9) oder automatische (13) Steuerung ausgegeben werden, um alle diese "bestimmten" Funktionsgeräte (1) den aufgenommenen Zustandsmeldungen entsprechend einzustellen.

2. Verfahren nach Anspruch 1, dadurch gekennzeichnet, daß zur Unterscheidung der Funktionsgeräte (1), deren Zustände aufgenommen werden sollen, in bezug auf andere Funktionsgeräte, die für die Hand- oder automatische Steuerung unzugänglich sein sollen, in den Speicher (123) nur die geänderten Zustandsmeldungen eingegeben werden.

3. Verfahren nach Anspruch 1 oder 2, dadurch gekennzeichnet, daß als Funktionsgeräte (1) Geräte verwendet werden, die so ausgestattet sind, daß sie nur eine Zustandsmeldung über den Kommunikationsweg (4) aussenden, wenn ihr Zustand geändert ist.

4. Verfahren nach einem der Ansprüche 1 bis 3, dadurch gekennzeichnet, daß erfaßt wird, ob in ein und derselben Aufnahmesitzung dasselbe Funktionsgerät zwei Zustandsmeldungen mit zeitlichem Abstand ausgesendet hat, und nur die jüngere der beiden gespeichert wird.

5. Verfahren nach einem der Ansprüche 1 bis 4, dadurch gekennzeichnet, daß zur Erarbeitung einer Zustandswiedergabemeldung ein variabler Teil (29, 33, 35), der einen variablen Teil der entsprechenden Zustandsmeldung gleicht, und ein Teil (34), der allen Zustandswiedergabemeldungen gemein ist und in der Zustandsmeldung nicht enthalten ist, kombiniert werden, wobei der variable Teil eine Adresse (32) des Funktionsgeräts enthält, von dem die Zustandsmeldung ausgeht, und ein Signal (33), das für den Zustand des Funktionsgeräts repräsentativ ist.

6. Verfahren nach einem der Ansprüche 1 bis 5, dadurch gekennzeichnet, daß zwei aufeinanderfolgende Aufnahmestufen vorgesehen sind, die zwei verschiedenen Kombinationen von Einstellungen der Funktionsgeräte entsprechen, und die beiden entsprechenden Zustandsmeldungsserien in zwei verschiedene Register des Speichers eingegeben werden;
und daß über den Kommunikationsweg (4) entweder durch die Hand- (9) oder automatische Steuerung eine Serie von Zustandswiedergabemeldungen ausgesendet wird, die der jeweiligen der beiden Zustandsmeldungsserien entspricht.

7. Verfahren nach einem der Ansprüche 1 bis 6, dadurch gekennzeichnet, daß eine Steuerung (12) zur Eröffnung der Aufnahmesitzung betätigt wird, um den Speicher empfangsbereit zu machen.

8. Verfahren nach Anspruch 7, dadurch gekennzeichnet, daß nach der Betätigung der Steuerung (12) zur Eröffnung der Aufnahmesitzung die Hand- (9) oder automatische Steuerung festgelegt wird, mit der die Zustände, die nun aufgenommen werden, wiedergegeben werden sollen.

9. Verfahren nach Anspruch 8, dadurch gekennzeichnet, daß zur Bestimmung der Steuerung die Handsteuerung (9) betätigt wird, mit der die Zustände, die nun aufgenommen werden, wiedergegeben werden sollen.

10. Verfahren nach Anspruch 8 oder 9, dadurch gekennzeichnet, daß die Hand- oder automatische Steuerung aus mehreren Hand- oder automatischen Steuerungen (9) gewählt wird, die sensorisch angezeigt werden, nachdem die Steuerung zur Eröffnung der Sitzung (12) betätigt wurde.

11. Verfahren nach einem der Ansprüche 1 bis 10, dadurch gekennzeichnet, daß eine Steuerung (12) zur Eröffnung der Aufnahmesitzung betätigt wird, um den Speicher empfangsbereit zu machen, wobei diese Eröffnungssteuerung für die Hand- (9) oder automatische (13) Steuerung kennzeichnend ist, mit der die Zustände, die nun aufgenommen werden, wiedergegeben werden sollen.

12. Vorrichtung zum Aufnehmen und Wiedergeben von komplexen Zuständen in einer Gruppe von technischen Einrichtungen, die miteinander durch einen in zwei Richtungen arbeitenden Kommunikationsweg (4) verbunden sind, wobei diese technischen Einrichtungen Funktionsgeräte (1) umfassen, die zum Aussenden von Zustandsmeldungen (28, 21 bis 33) über den Kommunikationsweg und Empfangen von Befehlsmeldungen (31-34) ausgebildet sind, dadurch gekennzeichnet, daß sie folgendes umfaßt:
- einen Speicher (123) zum Aufnehmen von Zuständen;
- eine Mikrosteuereinrichtung (118), die für den Empfang von Zustandsmeldungen, Steuern von deren Aufnahme in dem Speicher (123) und Erarbeiten von Zustandswiedergabemeldungen (34, 31, 32, 33, 35) als Befehlsmeldungen aus diesen Zustandsmeldungen (28, 31 bis 33) programmiert ist;
- ein in zwei Richtungen arbeitendes Übertragungsmittel (124) zwischen der Mikrosteuereinrichtung und dem Kommunikationsweg;
- ein Mittel (12) zum Eröffnen einer Aufnahmesitzung; und
- ein Auslösemittel (9) zum Auslösen der gemeinsamen Aussendung von Zustandswiedergabemeldungen (31-35) über den Kommunikationsweg (4), die aus den aufgenommenen Zuständen erarbeitet wurden, um die Funktionsgeräte (1) im wesentlichen gleichzeitig in ihren im Speicher aufgenommenen Zustand zu bringen.

13. Vorrichtung nach Anspruch 12, dadurch gekennzeichnet, daß das Mittel zum Auslösen der Aussendung über den Kommunikationsweg (4) ein Anwendungsprogramm (121) der Mikrosteuereinheit (118) ist, das ein zumindest teilweise automatisches Auslösen der Aussendung von Zustandswiedergabemeldungen garantiert.

14. Vorrichtung nach Anspruch 12, dadurch gekennzeichnet, daß das Mittel(13) zum Auslösen der Aussendung über den Kommunikationsweg (4) vom Benutzer programmierbar ist.

15. Vorrichtung nach Anspruch 12, dadurch gekennzeichnet, daß das Mittel zum Auslösen der Aussendung eine Handsteuerung (9) umfaßt, die dem Benutzer zugänglich ist.

16. Vorrichtung nach einem der Ansprüche 12 bis 15, dadurch gekennzeichnet, daß das Mittel zur Eröffnung einer Sitzung eine Handsteuerung (12) zur Eröffnung einer Sitzung umfaßt, die dem Benutzer zugänglich ist.

17. Vorrichtung nach einem der Ansprüche 12 bis 16, dadurch gekennzeichnet, daß sie zumindest zwei Auslösemittel (9) umfaßt und daß der Speicher zumindest zwei Serien von Zustandsmeldungen aufnehmen kann, von welchen jede einem der Auslösemittel (9) entspricht.

18. Vorrichtung nach Anspruch 17, dadurch gekennzeichnet, daß sie Anzeigemittel (11) umfaßt, die bei jedem Auslösemittel (9) vorgesehen sind, und daß die Mikrosteuereinrichtung (118) programmiert ist, bei einer Betätigung des Mittels zur Eröffnung einer Sitzung die Anzeigemittel (11) zu aktivieren, die Bestimmung eines Auslösemittels (9) aus jenen, die den aktivierten Anzeigemitteln entsprechen, abzuwarten und die in einem Register des Speichers (123), das dem bestimmten Anzeigemittel zugeteilt ist, empfangenen Zustandsmeldungen einzuordnen.

19. Vorrichtung nach Anspruch 18, dadurch gekennzeichnet, daß die Mikrosteuereinrichtung (118) so programmiert ist, daß sie eine Bestimmung eines Auslösemittels (9) aus der Betätigung dieses Auslösemittels durch den Benutzer ableitet, nachdem das Mittel (12) zur Eröffnung einer Sitzung betätigt wurde.

20. Vorrichtung nach Anspruch 17, dadurch gekennzeichnet, daß sie für jedes Auslösemittel (9) ein Mittel (12) zur Eröffnung einer Sitzung umfaßt.

21. Vorrichtung nach einem der Ansprüche 12 bis 20, dadurch gekennzeichnet, daß die Mikrosteuereinrichtung (118) zur Aufnahme von Zustandsmeldungen (29, 31-33, 35) ohne wesentliche Veränderung und zur Aussendung von Meldungen (31-35) als Zustandswiedergabemeldungen, welche die Zustandsmeldungen wiedergeben, programmiert ist, wobei den Zustandswiedergabemeldungen, die von der Vorrichtung ausgesendet werden, ein universelles Zeichen (34) hinzugefügt wird.

22. Anlage, in welcher Funktionsgeräte (1) durch einen in zwei Richtungen arbeitenden Kommunikationsweg (4), über den sie Zustandsmeldungen aussenden können und von dem sie Befehlsmeldungen empfangen können, mit einer Vorrichtung (6 bis 8) zur Aufnahme und Wiedergabe komplexer Zustände gemäß einem der Ansprüche 12 bis 20 verbunden sind.

23. Anlage nach Anspruch 22, dadurch gekennzeichnet, daß die Funktionsgeräte (1) von einer Art sind, daß sie erst dann eine Zustandsmeldung aussenden, wenn ihr Zustand verändert wird.

24. Anlage nach Anspruch 22 oder 23, dadurch gekennzeichnet, daß die Funktionsgeräte (1) von einer Art sind, daß sie Zustandsmeldungen aussenden, die einen Signaturteil (35) umfassen, der die Art des Funktionsgeräts kennzeichnet.

25. Anlage nach einem der Ansprüche 22 bis 24, dadurch gekennzeichnet, daß die Funktionsgeräte (1) zumindest ein Funktionsgerät umfassen, das ungefähre Zustandsmeldungen als Zustandsmeldungen aussendet.
